# EUROPEAN PATENT SPECIFICATION

(11) **EP 0 640 288 B1**
(45) Date of publication and mention of the grant of the patent: **26.05.1999**
(21) Application number: 94870143.8
(22) Date of filing: 26.08.1994
(51) Int. Cl.: A22B 3/00

(54) **Device for stunning animals**
Betäubungsvorrichtung für Schlachtvieh
Installation d'assommage des animaux

(30) Priority: 27.08.1993 BE 9300883; 18.11.1993 BE 9301275
(43) Date of publication of application: 01.03.1995
(73) Proprietor: VANHAECKE, Hubert, B-8630 Veurne (BE)
(72) Inventor: VANHAECKE, Hubert, B-8630 Veurne (BE)
(74) Representative: Powis de Tenbossche, Roland

(56) References cited:
- EP-A- 0 280 111
- FR-A- 1 125 412
- US-A- 3 828 396

## Description

The invention relates to a device for stupefying animals which are placed in cages and are conveyed to a pit, for example to a pit containing CO₂.

Such devices are known. French Patent 1 125 412, for example, discloses a device which comprises a series of cages which are driven by a chain and a motor. In said device, an animal is moved into a cage, conveyed to a CO₂ pit in order to be stupefied, and taken out of the cage after stupefaction.

The cages are provided with a hinged side having a locking system which prevents the side from being opened during the displacement of the cage in the CO₂ pit.

The bottom of the cage does not pivot prior to the opening thereof, as a result of which the removal of an animal has to be carried out manually. In addition, the pivot of the hinge on the side is located near the bottom, which makes it necessary to lift the side back up in order to close it.

A device according to said French patent is therefore not suitable to stupefy a large number of animals, as the removal of animals and reclosing the sides of the cages takes a lot of time.

US-A-3 828 396 discloses a device for stupefying animals in which the animals rest on a carrier, which carrier includes two sides between which the animal is located. Said device uses a temporary bottom during the placement of an animal in the carrier. In order to remove an animal, the carrier is rotated through ± 120° which requires a lot of energy. Moreover, as the stupefied animal does not rest on a bottom, removal of the animal is difficult and cannot be carried out completely automatically or without the assistance of a worker.

In order to overcome the disadvantages of the abovementioned device according to US-A-3 828 396, a device is disclosed in which the cages are provided with a bottom and a side, which are mounted rotatably relative to the cage and which are connected to each other in such a manner that when the animal is being unloaded and the cage recloses, the rotation of the bottom causes the side to rotate and the rotation of the side causes the bottom to rotate. As the bottom is mounted on an axle, a large force is required to rotate the bottom, which force is provided by the drive mechanism of the cages. The drive mechanism is thus overdimensioned for moving the cages, and for causing the bottom as well as the side to rotate in order to form an opening through which the animal can be removed from the cage.

The removal of an animal from the cage takes up a lot of time, as this is mainly dependent on the rotation of the bottom and since, as long as bottom has not rotated sufficiently, the side will not have rotated sufficiently in order to form an opening for taking out or removing an animal from the cage.

The present invention relates to a device in which the removal of an animal from a cage is facilitated (e.g. in one embodiment, the time to remove an animal from a cage does not depend on the rotation of the bottom), in which the drive mechanism is not overdimensioned, and in which pivoting the side is facilitated by the force of gravity and in one embodiment, does not even depend on the rotation of the bottom.

The device according to the present invention comprises a series of cages which are displaced by a drive mechanism in a pit, each of said cages includes a bottom, two sides, and on the ends of which there are preferably one or two walls or doors, in which means act on one of the cage sides and on the bottom in order to allow the bottom to rotate about a first axle, in order to form an opening in one of said sides for removing a stupefied animal from the cage. Such a device is known for example from EP-A-0,280,111.

The device according to the invention is characterized in that said means comprises a first means which allows the cage to rotate relative to the first axle without forming an opening for removing an animal from the cage in such a manner that a motive power is applied to the animal lying in the cage in the direction of a first side; and a second means which prevents said opening for the release of an animal from the cage being formed during the rotation of the cage by said first means, such that after disengaging said second means, said first side rotates in order to form an opening for releasing an animal from said cage.

The first means which moves the cage or bottom or causes it to move, preferably consists of an element which is connected to the cage or bottom and which is displaced along a guiding means in order to cause the cage or the bottom to rotate, or of an element which is connected to the pit and on which the cage or part thereof is displaced in order to cause the cage or the bottom to rotate.

In one embodiment, a locking system acts on the first side in order to prevent an opening being formed, for example between the first side and the bottom, during rotation of the bottom for releasing an animal from the cage.

According to one feature of an embodiment in which the first side is mounted rotatably relative to an axle, the second means applies a force to the first side in order to prevent, during the rotation of the bottom by the first means, the abovementioned side rotating relative to its own axle, thereby forming the opening for releasing an animal from the cage. According to a feature of said embodiment, said cage is provided with a locking system for the first side, in which, as a result of the first means, the bottom, the first side and the cage rotate together relative to the axle from which the cage is suspended, and in which, after joint rotation and after unlocking the first side, said first side rotates relative to its axle in order to form an opening for releasing an animal from the cage.

Preferably, the first means is a wheel or gear wheel which is mounted on the cage and which rolls on a guiding means in order to cause the cage to rotate, as a result of which the animal which lies in the cage is moved to the first side.

The locking system comprises, for example, a locking member which is provided with a head, the device being provided with a mechanism having a guide for the abovementioned head, by means of which the abovementioned head can be displaced relative to the first side so as to achieve unlocking.

According to another embodiment, the device is provided with a guiding means on which a wheel or gear wheel which is connected to the first side by means of an arm rolls in order to prevent, during the rotation of the bottom by the first means, an opening being formed for releasing an animal from the cage, while the bottom is connected to an arm which bears a wheel or gear wheel which rolls on the abovementioned guiding means. Preferably, one of the abovementioned arms is mounted rotatably so that, when the wheel or gear wheel on said arm touches the guiding means, the abovementioned arm rotates in such a manner that the locking system is unlocked.

Advantageously, the device according to the invention is provided with a system to:
- allow the first side to rotate so as to form an opening for releasing an animal from the cage, and/or
- cause said side to rotate, in a closed state, relative to the cage.

Preferably, the device comprises means to allow or cause the first side to move so as to form an opening between said first side and the bottom for removing an animal from the cage.

In another embodiment, part of the bottom is connected to the side and the device comprises means to allow or cause said first side to move so as to open the bottom for removing an animal from the cage.

The cage is provided, for example, with two opposite rotatable sides, a first part of the bottom being connected to a first side, while the second part of the bottom is connected to the second side. In this case, the device preferably comprises means to allow or cause said sides to move so as to form an opening between the first part of the bottom and the second part of the bottom for releasing an animal from the cage.

In a specific embodiment, each side bears a part of the bottom, the sides being joined together by a means, the two parts of the bottom being moved away from each other so as to form an opening for releasing an animal from the cage.

In another embodiment, the device is provided with means to allow or cause the cage to rotate, at least during the opening of the bottom, preferably in the direction of the first side, to which a force is applied by the animal which lies in the cage.

Other features and aspects of advantageous embodiments of devices according to the invention will emerge from the following description, reference being made to the attached drawings, in which:
Figure 1 diagrammatically shows a device according to the invention;
Figure 2 shows a cage of a device according to the invention;
Figures 3A to 3F inclusive show a detail of the device shown in Figure 1;
Figure 4 shows a detail of a system to cause a side of the cage to open;
Figure 5 shows a sectional view along the line V-V of the system of Figure 4;
Figure 6 shows another embodiment of a system for unlocking a side of the cage;
Figures 7A to 7D inclusive show a schematic embodiment of a cage which can be used in a device according to the invention;
Figures 8A to 8C inclusive show a further embodiment of a device according to the invention;
Figure 9 diagrammatically shows another embodiment of a device according to the invention;
Figure 10 shows, on an enlarged scale, a cage of the device according to Figure 9 during the opening thereof;

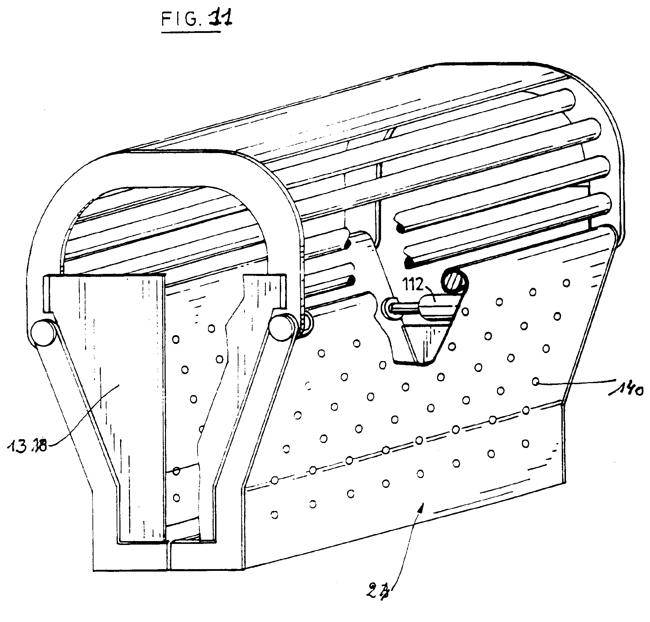

Figure 11 shows a side view of the cage of Figure 10.

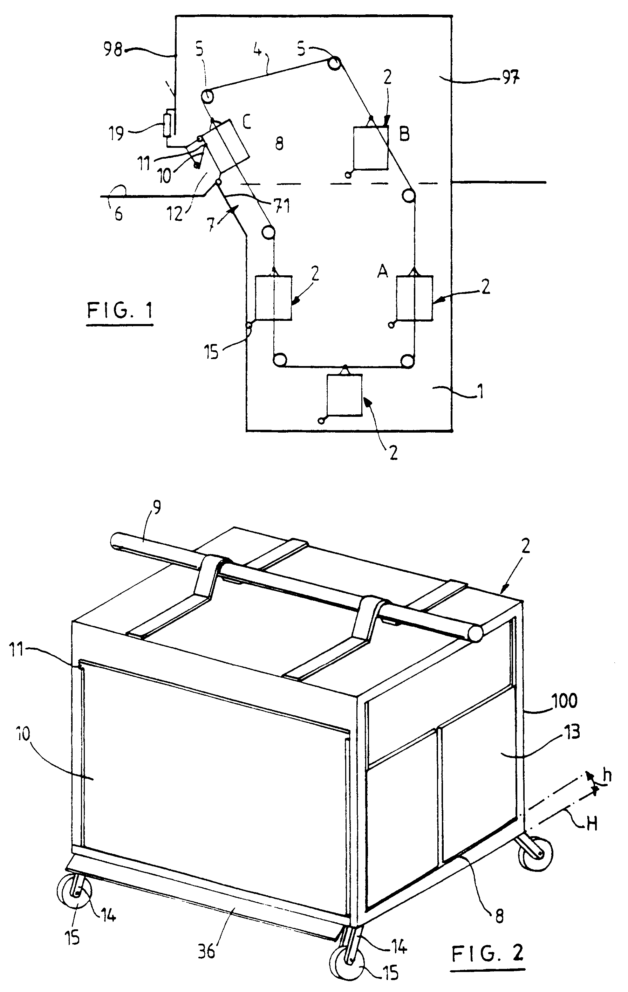

The device shown in Figure 1 comprises:
- a pit 1 containing CO₂ gas to stupefy animals;
- a series of cages 2 to move animals to the pit 1 (position A), to move the cages to a position B to allow an animal or animals to be placed in a cage (position B), and to bring the cages to position C to allow an animal or animals to be removed from a cage;
- a drive mechanism for the cages 2 which comprises a motor, a chain 4 from which the cages are suspended, and gear wheels 5, whose teeth mesh with the chain 4;
- a table 6 for receiving a stupefied animal or animals from the cage;
- a first means 7 to cause the bottom 8 of a cage to rotate relative to the axle 9 from which the cage 2 is suspended, and to cause the animal which lies in the cage 2 to move to a side 10 of the cage;
- a second means which applies a force to the side 10 in order to allow said side 10 to open relative to the axle 11, after the bottom and the cage have pivoted relative to the axle 9, in such a manner that an opening 12 is formed between the side 10 and the bottom 8, as a result of which the animal slides out of the cage 2 onto the table 6.

A cage 2 is shown in Figure 2. Said cage comprises:
- a bottom 8 which extends in a plane running at an angle h of 0 to 10°, for example 5°, relative to a horizontal plane H, when the cage is not subject to a means to cause the rotation thereof relative to the axle 9;
- two sides 10 and 100, one side 10 of which is mounted on an axle 11;
- walls or doors 13 on the ends to allow animals to be placed in the cage 2;
- arms 14 which are attached to a side of the cage 2, arms 14 on which wheel 15 is mounted.

The device comprises one guiding means 71, which serves to cause the cage 2 to rotate relative to the axle 9 before the side 10 is opened, so that, after the side 10 has been unlocked relative to the cage 2, the pivoting of the side 10 to an open state is already caused by the force of gravity.

The pivoting of the cage 2, before the side is opened, is achieved by the wheels 15 contacting the guiding means 71.

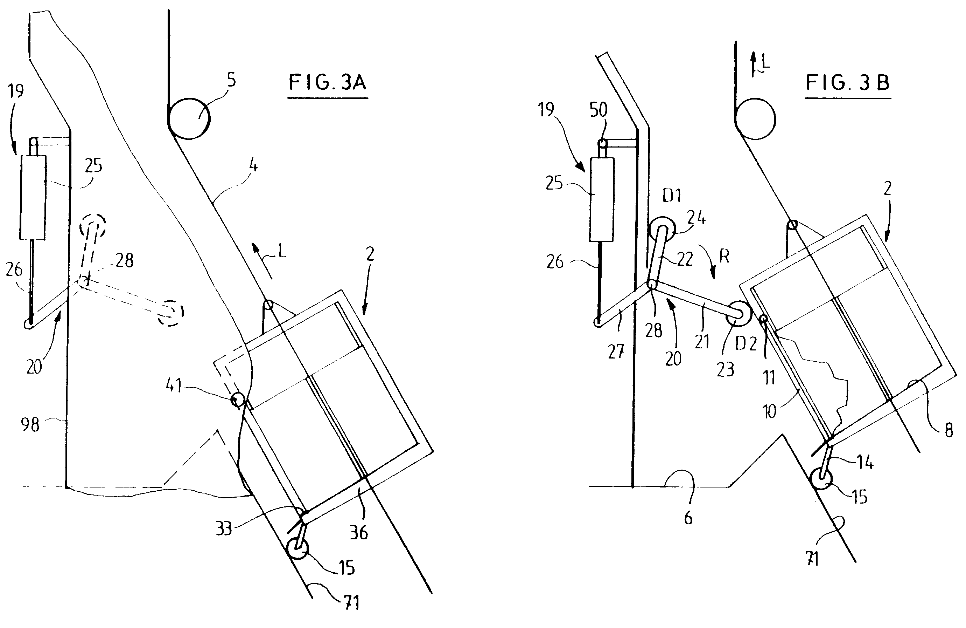

The device preferably also comprises a system 19 to control the rotation of the side 10. Details of the system are shown in Figures 3A to 3F. The system 19 comprises:
- a Y-shaped lever 20, whose two arms 21, 22 are provided with rollers 23, 24, which rollers are intended to roll on a part of the cage or side 10, and
- a cylinder 25 which is mounted rotatably on an axle 50 and whose rod 26 is rotatably connected to the arm 27 of the lever 20.

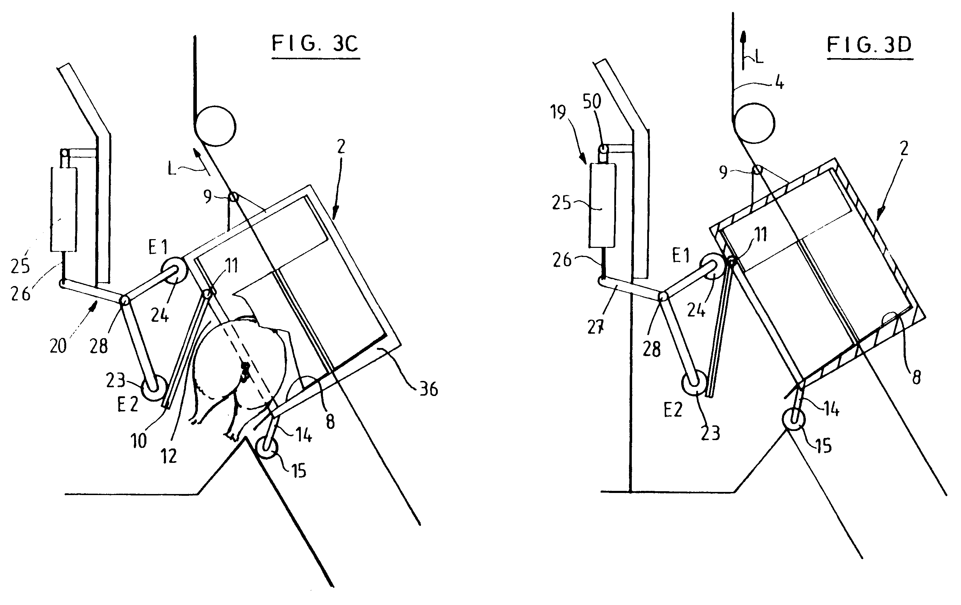

Because of the action of the cylinder 25, the lever 20 rotates (R) relative to its axle 28, as a result of which the rollers 23, 24 can be moved into position D1, D2 or into position E1, E2. (See Figures 3B and 3C).

Because the wheel 15 rolls on the guiding means 71, the cage 2 is rotated about its axle 9. While the wheel 15 still rests on the guiding means 71, the roller 23 contacts the cage 2 and the closed side 10 (Figure 3B).

By turning the lever 20, the rollers 23, 24 are brought into positions E1, E2. By moving the roller 23 into position E1, the side 10 rotates about its axle 11 to enable the removal of the animal from the cage 2. The roller 23 thus serves as a means to control the rotation of the side 10.

When roller 23 is in position E2, the roller 24 is in position E1. Said roller 24 serves as a support for the cage 2 to prevent rotation thereof when the wheel 15 no longer rolls along the guiding means 71. (See Figure 3D).

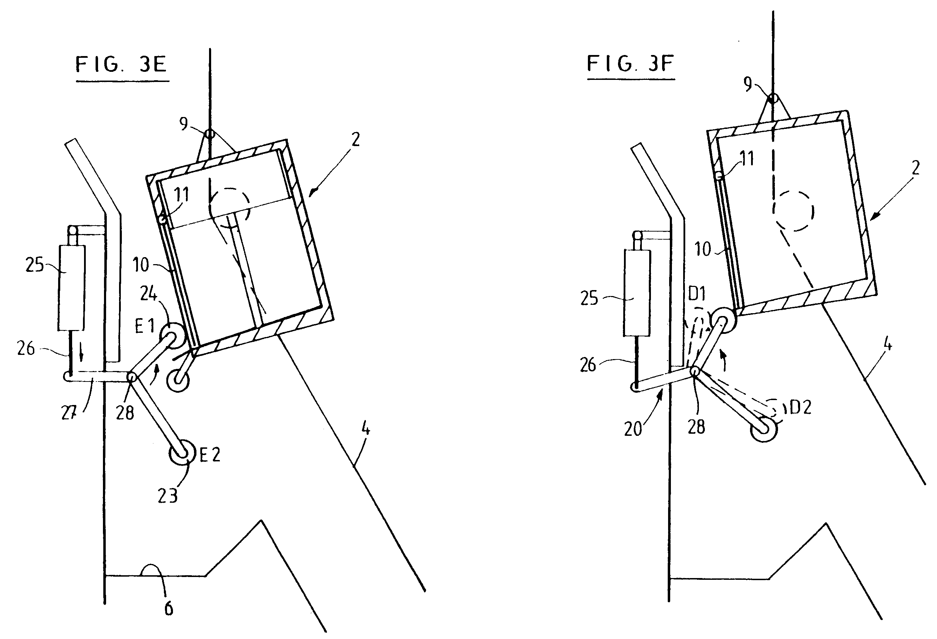

By continuously moving L the cage 2 by means of the chain 4, the roller 24 rolls onto the cage 2 while the roller 23 rolls onto the side 10, as a result of which the roller 23 now presses on the side 10 in order to move said side 10 into its closed position. When the side 10 touches the roller 24, said side 10 is already partly (for example half, centre position between the open position of the side 10 of Figure 3C and the closed position of side 10) closed. Roller 24 now serves as a means to close off the side 10 (see Figures 3D and 3E).

After the cage 2 has been closed, the lever 20 is turned back (see Figures 3E and 3F) to return the rollers 23 and 24 to position D1, D2.

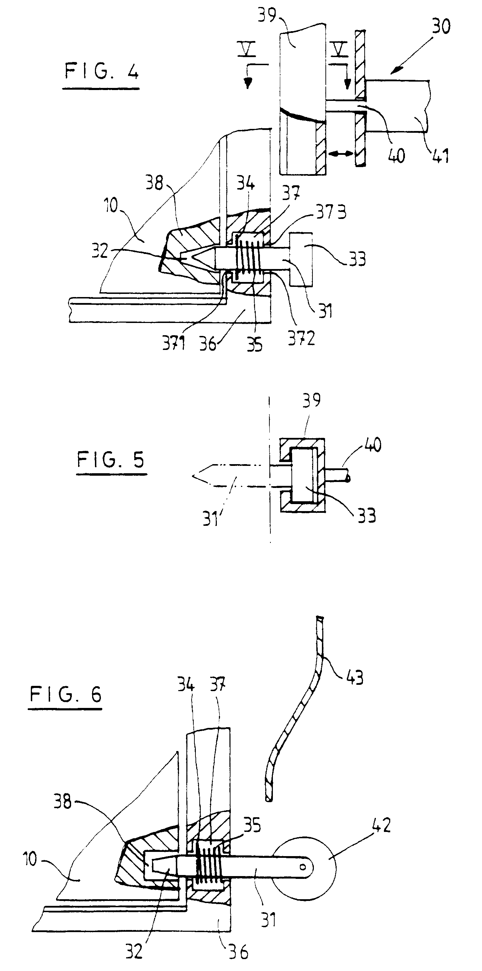

Figure 4 shows a detail of a system 30 to unlock the side 10. The locking system consists of a bar 31 whose end 32 tapers, while the other end bears a head 33. A washer 34 is attached to the bar 31 and serves as a support for the end of a spring 35. The structure 36 of the cage 2 shows a chamber 37 having two apertures 371, 372 through which the bar 31 extends, while the side 10 shows a nick 38 into which the tapered or conical end 32 is inserted to lock the side 10.

A side 373 of the chamber 37 which faces the head 33 also serves as a support for an end of the spring, as a result of which the spring 35 presses the end 32 of the bar 31 towards the nick 38 at the bottom of the side 10. The pushing force of the spring 35 may be of such magnitude in relation to the minimum pushing force required to close the side 10 that when said side 10 is pushed towards the structure 36 of the cage by the roller 24, said side 10 moves the tapered end 32, as a result of which the bar 31 is moved counter to the force of the spring 35. In this manner, the side 10 can only be locked again by the roller 24 pushing against it. (Figure 3E).

By moving the cage 2, the head 33 is inserted into a slot 39 which is attached to the end of a bar 40 of a cylinder 41. As soon as the head is inserted in the slot 39, the cylinder pulls on the slot 39 and the head, so that the end 32 is no longer inserted in the nick 38, thereby unlocking the side 10. (See Figures 4 and 5). Said cylinder 41 is mounted on a wall 98 of a chamber 97 which is located above the pit (see Figure 3A).

Figure 6 shows another embodiment of a system for unlocking the side. Said system is similar to the system depicted in Figure 4, but the end of the bar 31 is provided with a roller 42 which is intended to roll on a guiding means 43. When the roller 42 rolls on the guiding means 43, the bar 31 is pulled out of the nick 38 in the side, thereby unlocking the side 10.

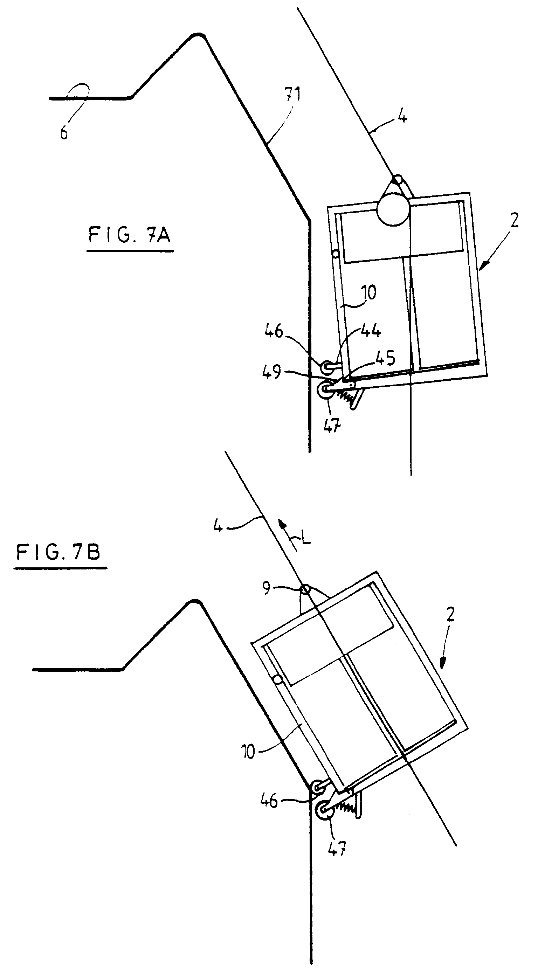

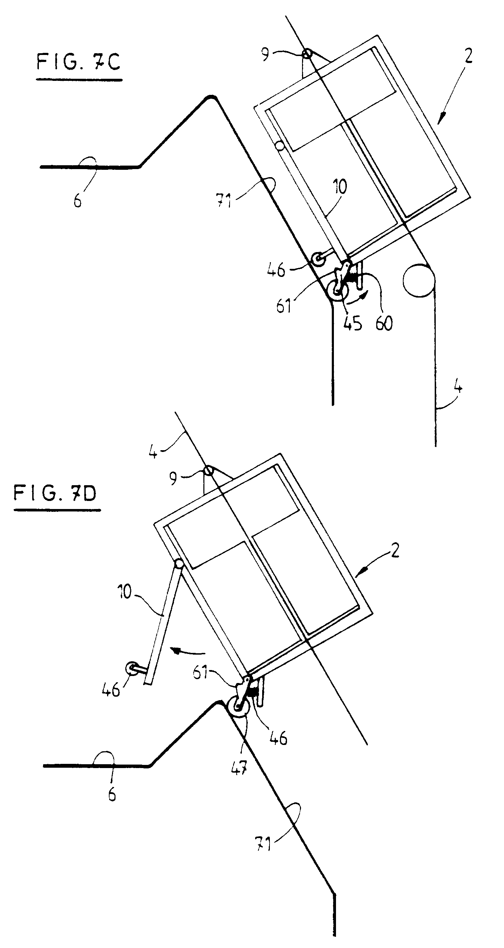

Figure 7A shows a cage 2 similar to the cage 2 of Figure 2, but provided with another embodiment of the locking system for the side 10.

In said embodiment, the side 10 and the bottom 8 are provided with an arm 44 which bears a wheel 46, and with a locking device 45 which bears a wheel 47 and comprises a lock bolt 49. The locking device 45 is mounted rotatably on the bottom 8 of the cage 2, the lock bolt 49 serving as locking system for the side 10.

The wheels 46, 47 are intended to roll on the guiding means 71.

In the position of Figure 7B, the wheel 46 runs on the guiding means 71, so that the cage 2 rotates around its axle 9, while the wheel 47 does not yet touch the guiding means 71.

In the position of Figure 7C, the wheels 46 and 47 roll on the guiding means 71. With respect to Figure 7B, the locking device 45 rotates about its axle 49, as a result of which the lock bolt 49 no longer locks the side 10. Rolling of the wheel 46 on the guiding means 71, prevents the side 10 from being rotated about its axle 11 .

Turning the arm or locking device 45 to unlock the side 10 is carried out counter to the force of a spring 60, so that the locking device 45 turns back into its position before the side 10 was locked again as soon as the wheel 47 no longer rests on the guiding means 71. As a result of the bevelled side 61 of the lock bolt, the side 10 can be locked again by pushing the side 10 towards the structure 36 of the cage 2.

As soon as the wheel 46 no longer rolls on the guiding means 71, the side 10 rotates about its axle 11, and at the same time the cage 2 is prevented from rotating by the wheel 47 which still rests on the guiding means 71.

Figures 8A to 8C inclusive show an aspect of another embodiment of a device according to the invention .

The cages 2 are suspended from a chain 4 by means of an axle 9. Near the table 6 or upper edge 96 of the pit 1 which is located close to the table 6, the chain 4 runs in a direction which has an inclination γ of approximately 45° relative to a horizontal plane H (e.g. 5° ≤ γ ≤ 85°).

The pit 1 is provided with wheels 99 on its upper edge 96, which wheels 99 serve to cause the cage 2 to rotate about its axle 9.

In Figure 8A, the cage 2 does not yet touch the wheels 99, as a result of which the cage does not rotate about its axle 9.

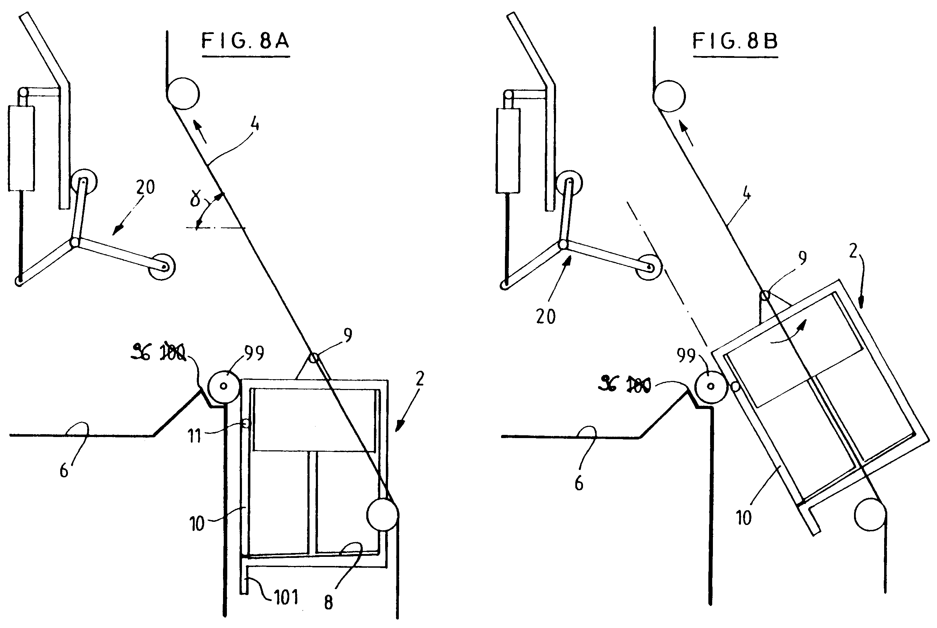

In Figure 8B, the cage 2 touches the wheels 99, causing the cage 2 to rotate about its axle 9.

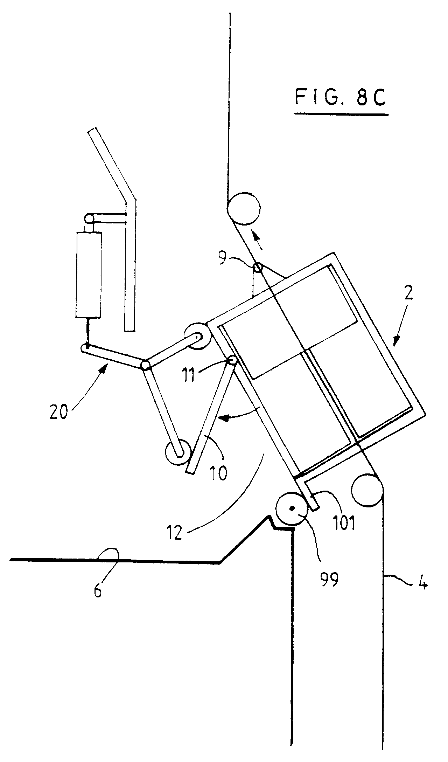

In Figure 8C, one leg 101 of the cage 2 still rests on the wheels 99 to prevent the cage 2 from rotating back into its vertical position when the side 10 is being opened. The leg 101 is located on the underside of the cage 2.

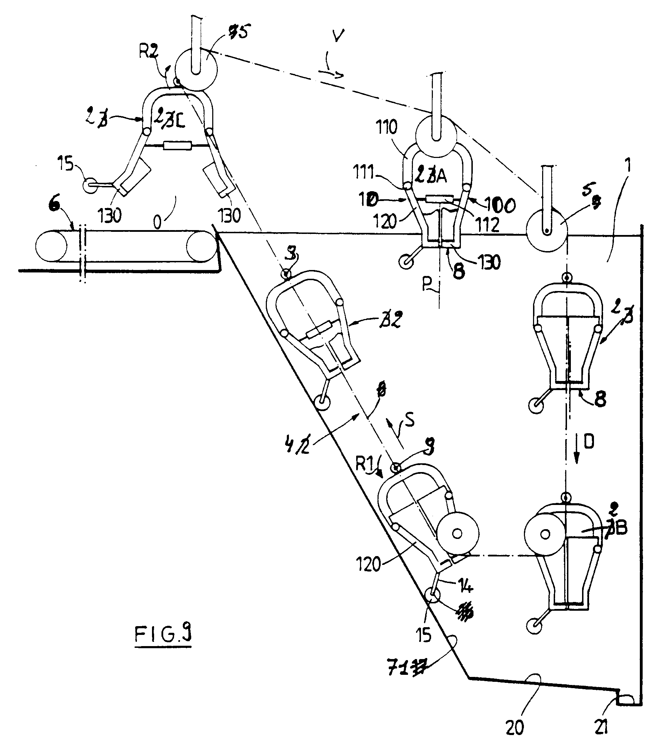

The device shown in Figure 9 is a device for stupefying beasts in a pit 1 containing CO₂ gas (stupefying agent). The device comprises a system of cages 2. Said system 2 serves to move the cages 2 above the pit 1 and into the pit 1.

The cages are provided with means which allow a beast or beasts to be placed inside and with means which allow a beast or beasts to be dropped, after stupefaction, from the cage 2 onto a support 6. The means for dropping beasts from a cage are means which open the bottom 8 of the cage.

The device is also provided with a means for allowing the cage to rotate (R), at least during the opening of the bottom.

The cage 2 is mounted on an axle which is connected to a chain 4, which chain is set in motion by toothed wheels 5 and a motor (arrow V).

A pig is placed inside the cage 2A while said cage is located above the pit 1. The cage is not set in motion when the beast is released into the cage 2A.

After the beast has been placed in the cage 2A, said cage is moved to the bottom of the pit 1 (position of the cage 2B) and subsequently moved upwards in order to position the cage above the pit 1 (position of the cage 2C). The beast was stupefied during the movement of the cage 2A in the pit 1.

After said stupefaction, the beast is dropped from the cage onto a support or table 6.

The cage 2A comprises a bottom 8 and sides 10, 100 which consist of a top part 110 and a bottom part 120. Abovementioned parts 110, 120 are connected so as to be rotatable, for example, by means of an axle 111. The bottom parts 120 of the two opposite sides 10, 100 are connected by means of a cylinder 112, with which the abovementioned bottom parts can be moved away from each other or moved towards each other. The bottom parts 120 each bear a part 130 which forms a part of the bottom when the bottom parts 120 are moved towards each other.

When the bottom parts are moved away from each other, an opening 0 is formed between the parts 130, as a result of which the beast can drop from the cage onto the table.

A bottom part 120 is provided with an arm 14, the free end of which bears a gear wheel 15. The pit 1 has a guiding means 71 on which the gear wheel 15 rests, at least during the raising of the cage from the pit 1.

The cage 2A-2B has a mainly symmetrical plane P which is vertical during the downward movement (D) of the cage 2 into the pit 1 and which is inclined during the upward movement (S) of the cage 2 from the pit 1. The inclined upward movement of the cage 2 is achieved by the gear wheel 15 sliding or rolling on the guiding means 71, the cage 2 in this case being rotated relative to its axle 9 (R1).

As a result of being stupefied and because of the inclined upward movement of the cage 2, the beast rests mainly on the side 10 which is provided with the arm 14.

As long as the cage 2 is located in the pit 1 and as long as the bottom is located below the table 6 during the upward movement of the cage 2, the gear wheel 15 rests on the guiding means 71. When the cage 2 is located above the table 6, the gear wheel 15 no longer rests on the guiding means 71 and the cage 2 rotates about its axle 9 (arrow R2). During the rotation of the cage (R2), the bottom 8 is opened, as a result of which the beast drops onto the table. Due to said rotating movement during the opening of the bottom, the beast drops onto the table 6 but not back into the pit 1. In particular, as the beast rests on the side 10 (i.e. the side of the cage 2 which faces the table 6 when the cage 2 is moved above the pit 1), the rotating movement of the cage 2 is accelerated by the weight of the beast.

In order to achieve improved stupefaction, the sides are provided with passages 140, resulting in an improved flow of CO₂ into the cage.

In addition, in order to avoid problems when cleaning the pit, the bottom 20 is preferably an inclined bottom provided with a discharge channel.

The cage can also be provided with doors 13.

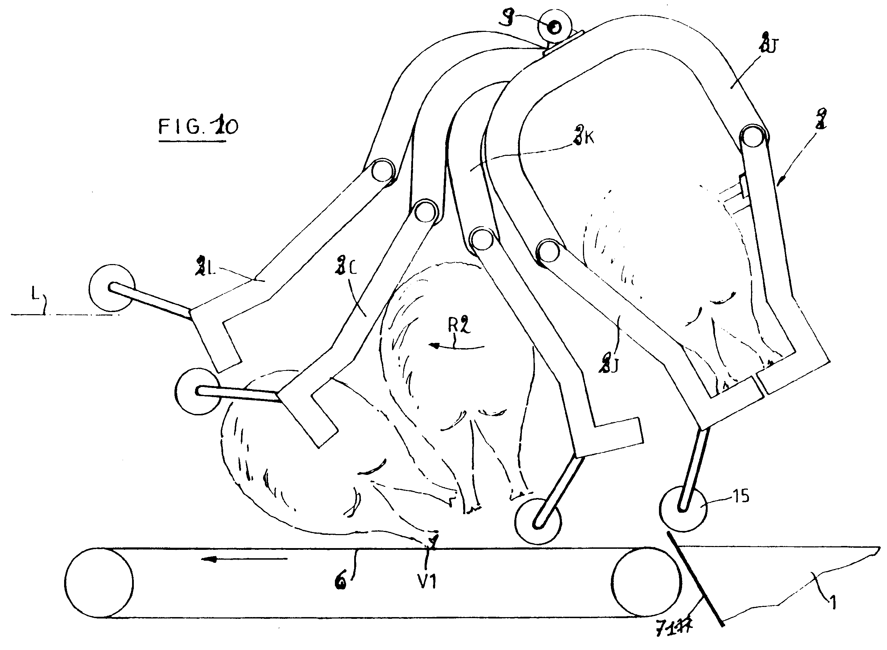

Figure 10 shows a movement of the cage 2 and of a stupefied beast during the opening of the bottom. The positions of the cage 2 are indicated by 2J, 2K, 2L and 2C. Although the bottom 8 may be opened when the cages are being moved by the chain 4, Figure 10 shows the bottom 8 being opened when the chain 4 is not moving, for example in order to place a beast inside the cage 2A.

As soon as the gear wheel 15 no longer rests on the guiding means (position 2J), the cage 2 rotates about its axle 9 (R2). Said rotational movement is accelerated by the weight of the beast which lies on the side facing the table.

As soon as the bottom 8 is above the table 6 (position 2C, also indicated in Figure 9), the bottom 8 is opened, whereby the beast drops on the table 6. As the beast is also subject to a rotational movement R2, the beast drops onto the table in a location (V1) which is still remote from the pit 1.

When the beast drops from the cage, the cage still rotates until it reaches a final position 2L, in which case the gear wheel 15 reaches its highest level L relative to the table 6. This is advantageous if a conveyor belt is being used as table 6, as the removal of the beast can already be effected by said belt during the rotational movement of the cage (the gear wheel 15 and the bottom 8 do not impede the conveyance of the beast on the belt; they do not even touch the beast during the conveyance of the beast on the belt).

## Claims

1. Device for stupefying animals, comprising a series of cages (2) which are displaced by a drive mechanism (4, 5) in a pit (1), each of which cages (2) includes a bottom (8), two sides (10, 100), and on the ends of which there are preferably one or two walls or doors, in which means act on one of the cage sides and on the bottom in order to allow the bottom (8) to rotate about a first axle (9), in order to form an opening (12) in one of said sides for removing a stupefied animal from the cage, characterized in that said means comprises a first means (7) which allows the cage (2) to rotate relative to the first axle (9) without forming an opening (12) for removing an animal from the cage in such a manner that a motive power is applied to the animal lying in the cage, in the direction of a first side (10); and a second means which prevents said opening (12) for the release of an animal from the cage being formed during the rotation of the cage by said first means, such that after disengaging said second means, said first side (10) rotates in order to form an opening (12) for releasing an animal from saide cage.

2. Device according to Claim 1, characterized in that the first means (7) which moves the cage (2) or bottom (8) or causes it to move consists of an element (15) which is connected to the cage or bottom and which is displaced along a guiding means (71) in order to cause the cage or the bottom (8) to rotate.

3. Device according to Claim 1, characterized in that the first means which moves the cage or bottom or causes it to move consists of an element which is connected to the pit and on which the cage or part thereof is displaced in order to cause the cage or bottom to rotate.

4. Device according to Claim 2, characterized in that a system (31, 46) applies a force to the first side (10) in order to prevent, during the rotation of the bottom (8), an opening (12) being formed for releasing or removing an animal from the cage.

5. Device according to one of the preceding claims, characterized in that abovementioned first side (10) is mounted rotatably on an axle (11), and in that the second means applies a force to the first side (10) in order to prevent, during the rotation of the bottom (8) by the first means, the abovementioned side (10) rotating relative to its axle (11), thereby forming an opening (12) for releasing an animal from the cage.

6. Device according to Claim 5, characterized in that each cage (2) is suspended rotatably on an axle (9), while the first side (10) is rotatably connected to the cage (2) by means of an axle (11), in that the cage is provided with a locking system (31, 49) for the first side (10), in which, as a result of the first means (7), the bottom (8), the first side (10) and the cage (2) rotate together about the axle (9) from which the cage (2) is suspended, and in which, after joint rotation and after unlocking the first side (10), said first side (10) rotates about its axle (11) in order to form an opening (12) for releasing an animal from the cage.

7. Device according to Claim 6, characterized in that the first means is a wheel or gear wheel (15) which is mounted on the cage and which rolls on a guiding means (71) in order to cause the cage (2) to rotate, as a result of which the animal is moved to the first side (10) of the cage.

8. Device according to Claim 6, characterized in that the locking system comprises a locking member (31) which is provided with a head (33, 42), the device being provided with a mechanism (30, 43) having a guide (39, 49) for the abovementioned head (33, 42), by means of which the abovementioned head is displaced relative to the first side (10) so as to achieve unlocking.

9. Device according to Claim 6, characterized in that the device is provided with a guiding means (71) on which a wheel or gear wheel (46) is connected by means of an arm (44) to the first side (10) in order to prevent, during the rotation of the bottom (8) by the first means, an opening (12) being formed for releasing or removing an animal from the cage (2);
in that the bottom is connected to an arm (45) which bears a wheel or gear wheel (46) which rolls on the abovementioned guiding means (71) to prevent the cage from rotating when the opening (12) is formed, and
in that one of the abovementioned arms is mounted rotatably, the abovementioned arm rotating in such a manner that the locking system (49) is unlocked when the wheel or gear wheel of said rotating arm touches the guiding means (71).

10. Device according to one of the preceding claims, characterized in that it is provided with a system (19) for allowing the first side (10) to rotate while forming an opening for releasing or removing an animal from the cage and/or for causing said side (10) to rotate, in a closed state, relative to the cage.

11. Device according to Claim 10, characterized in that the system (19) for allowing the first side (10) to rotate comprises a Y-shaped lever (20) whose two arms (21, 22) are provided with rollers (23, 24), while the third arm (27) is connected to a means for causing the lever (20) to turn about its axle (28), the above-mentioned rollers (23, 24) being intended to roll along the side (10) and/or the cage (2), as a result of which, in a first position (D1), one (23) of the abovementioned rollers touches the closed side (10), while, in a second position (D2, E2) the abovementioned rollers are displaced in order to, initially, allow the side (10) to be opened and, subsequently, reclose said side (10).

12. Device according to Claim 1, characterized in that, near the table (6), the chain (4) runs in a direction which has an inclination (γ) relative to the horizontal plane (H).

13. Device according to Claim 12, characterized in that the inclination (γ) runs between 5° and 85°, preferably between 20° and 70°.

14. Device according to Claim 12 or 13, characterized in that the pit (1), near its side (96), is provided with a wheel, gear wheel or cylinder (99) on which the cage (2) or part thereof rests in order to cause the cage (2) or bottom (8) to rotate.

15. Device according to Claim 14, characterized in that the cage (2), on its underside, is provided with a leg (101) touching the cylinder, wheel or gear wheel so as to prevent the bottom (8) from rotating during the opening of the side (10).

16. Device according to one of the preceding claims, characterized in that the device comprises means to allow or cause the first side to move so as to form an opening (12) between said first side (10) and the bottom (8) for removing an animal from the cage.

17. Device according to one of the preceding Claims 1 to 15 inclusive, characterized in that a part of the bottom (8) is connected to the first side, and in that the device comprises means to allow or cause said first side to move in order to open the bottom (8) for removing an animal from the cage.

18. Device according to Claim 17, characterized in that the cage is provided with two opposite rotatable sides, a first part of the bottom being connected to a first side, while the second part of the bottom is connected to the second side, and in that the device comprises means to allow or cause said sides to move so as to form an opening between the first part of the bottom and the second part of the bottom for releasing an animal from the cage.

19. Device according to Claim 18, characterized in that each side bears a part of the bottom, and in that the sides are joined together by a means, the two parts of the bottom being moved away from each other so as to form an opening for releasing an animal from the cage.

20. Device according to one of Claims 1 to 17 inclusive, characterized in that the device is provided with a means to allow or cause the cage to rotate, at least during the opening of the bottom.

21. Device according to Claim 20, characterized in that the abovementioned means allows or causes the cage to rotate in the direction of the first side, to which a force is applied by the animal which lies in the cage.

## Patentansprüche

1. Vorrichtung zum Betäuben von Tieren, umfassend: eine Reihe von Käfigen (2), die durch einen Antriebsmechanismus (4, 5) in einer Grube (1) verschoben werden, welche Käfige jeweils einen Boden (8) und zwei Seitenwände (10, 100), und an ihren Enden vorzugsweise ein oder zwei Wände oder Türen aufweisen, in welcher Vorrichtung Mittel auf eine der Käfigseitenwände und auf den Boden einwirken, um den Boden (8) um eine erste Achse (9) drehen zu lassen zwecks Bildung einer Öffnung (12) in einer der Seitenwände zum Entfernen eines betäubten Tieres aus dem Käfig, dadurch gekennzeichnet, daß die Mittel ein erstes Mittel (7) umfassen, das ein Drehen des Käfigs (2) bezüglich der ersten Achse (9) ohne Bildung einer Öffnung (12) zum Entfernen eines Tieres aus dem Käfig erlaubt, derart, daß eine Bewegungskraft auf das im Käfig liegende Tier in Richtung auf eine erste Seitenwand (10) ausgeübt wird; und ein zweites Mittel umfassen, das verhindert, daß die Öffnung (12) zum Freigeben eines Tieres aus dem Käfig während des Drehens des Käfigs durch das erste Mittel gebildet wird, so daß sich nach dem Ausrücken des zweiten Mittels die erste Seitenwand (10) dreht, um, zum Freigeben eines Tieres aus dem Käfig, eine Öffnung (12) zu bilden.

2. Vorrichtung nach Anspruch 1, dadurch gekennzeichnet, daß das erste Mittel (7), das den Käfig (2) oder den Boden (8) bewegt oder deren Bewegung bewirkt, aus einem Element (15) besteht, das mit dem Käfig oder Boden verbunden ist und das entlang einem Führungsmittel (71) verschoben wird, um ein Drehen des Käfigs oder des Bodens (8) zu bewerkstelligen.

3. Vorrichtung nach Anspruch 1, dadurch gekennzeichnet, daß das erste Mittel, das den Käfig oder den Boden bewegt oder deren Bewegung bewirkt, aus einem Element besteht, das mit der Grube verbunden ist und entlang welchem der Käfig oder ein Teil davon verschoben wird, um ein Drehen des Käfigs oder des Bodens zu bewerkstelligen.

4. Vorrichtung nach Anspruch 2, dadurch gekennzeichnet, daß ein System (31, 46) eine Kraft auf die erste Seitenwand (10) ausübt, um während des Drehens des Bodens (8) das Bilden einer Öffnung (12) zum Freigeben oder zum Entfernen eines Tieres aus dem Käfig zu verhindern.

5. Vorrichtung nach einem der vorhergehenden Ansprüche, dadurch gekennzeichnet, daß die obengenannte erste Seitenwand (10) an einer Achse (11) drehbar angeordnet ist und daß das zweite Mittel eine Kraft auf die erste Seitenwand (10) ausübt, um zu verhindern, daß sich, während des Drehens des Bodens (8) durch das erste Mittel, die obengenannte Seitenwand (10) bezüglich ihrer Achse (11) dreht, wodurch eine Öffnung (12) zum Freigeben eines Tieres aus dem Käfig gebildet wird.

6. Vorrichtung nach Anspruch 5, dadurch gekennzeichnet, daß jeder Käfig (2) drehbar an einer Achse (9) aufgehängt ist, während die erste Seitenwand (10) mittels einer Achse (11) mit dem Käfig (2) drehbar verbunden ist, daß der Käfig mit einem Verriegelungssystem (31, 49) für die erste Seitenwand (10) versehen ist, wobei sich infolge des ersten Mittels (7) der Boden (8), die erste Seitenwand (10) und der Käfig (2) zusammen um die Achse (9), an der der Käfig (2) aufgehängt ist, drehen, und wobei sich die erste Seitenwand (10) nach dem gemeinsamen Drehen und nach dem Entriegeln der ersten Seitenwand (10) um ihre Achse (11) dreht, um eine Öffnung (12) zum Freigeben eines Tieres aus dem Käfig zu bilden.

7. Vorrichtung nach Anspruch 6, dadurch gekennzeichnet, daß das erste Mittel ein an dem Käfig angeordnetes Rad oder Zahnrad (15) ist, das auf einer Führungsvorrichtung (71) rollt, um zu bewirken, daß sich der Käfig (2) dreht, was dazu führt, daß das Tier zur ersten Seitenwand (10) des Käfigs bewegt wird.

8. Vorrichtung nach Anspruch 6, dadurch gekennzeichnet, daß das Verriegelungssystem ein Verriegelungsglied (31) umfaßt, das mit einem Kopf (33, 42) versehen ist, wobei die Vorrichtung mit einem Mechanismus (30, 43) mit einer Führung (39, 49) für den obengenannten Kopf (33, 42) versehen ist, mittels welches Mechanismus der obengenannte Kopf bezüglich der ersten Seitenwand (10) verschoben wird, um eine Entriegelung zu erzielen.

9. Vorrichtung nach Anspruch 6, dadurch gekennzeichnet, daß die Vorrichtung mit einer Führungsvorrichtung (71) versehen ist, auf dem ein Rad oder Zahnrad (46) mittels eines Arms (44) mit der ersten Seitenwand (10) verbunden ist, um zu verhindern, daß, während des Drehens des Bodens (8) durch das erste Mittel, eine Öffnung (12) zum Freigeben oder zum Entfernen eines Tieres aus dem Käfig (2) gebildet wird; daß der Boden mit einem Arm (45) verbunden ist, der ein Rad oder Zahnrad (46) trägt, das auf der obengenannten Führungsvorrichtung (71) rollt, um zu verhindern, daß sich der Käfig dreht, wenn die Öffnung (12) gebildet ist, und daß einer der obengenannten Arme drehbar angeordnet ist, wobei sich der obengenannte Arm derart dreht, daß das Verriegelungsystem (49) entriegelt wird, wenn das Rad oder Zahnrad des sich drehenden Arms die Führungsvorrichtung (71) berührt.

10. Vorrichtung nach einem der vorhergehenden Ansprüche, dadurch gekennzeichnet, daß sie mit einem System (19) versehen ist, das ein Drehen der ersten Seitenwand (10) gestattet, während eine Öffnung zum Freigeben oder zum Entfernen eines Tieres aus dem Käfig gebildet wird, und/oder bewirkt, daß sich die Seitenwand (10) in einem geschlossenen Zustand bezüglich des Käfigs dreht.

11. Vorrichtung nach Anspruch 10, dadurch gekennzeichnet, daß das System (19), das ein Drehen der ersten Seitenwand (10) gestattet, einen Y-förmigen Hebel (20) umfaßt, dessen zwei Arme (21, 22) mit Rollen (23, 24) versehen sind, während der dritte Arm (27) mit einem Mittel zum Bewirken eines Drehens des Hebels (20) um seine Achse (28) verbunden ist, wobei die obengenannten Rollen (23, 24) zum Rollen entlang der Seitenwand (10) und/oder dem Käfig (2) vorgesehen sind, was dazu führt, daß an einer ersten Stelle (D1) eine (23) der obengenannten Rollen die geschlossene Seitenwand (10) berührt, während an einer zweiten Stelle (D2, E2) die obengenannten Rollen verschoben werden, um am Anfang das Öffnen der Seitenwand (10) zu erlauben und anschließend die Seitenwand wieder zu schließen.

12. Vorrichtung nach Anspruch 1, dadurch gekennzeichnet, daß in der Nähe des Tisches (6) die Kette (4) in einer Richtung läuft, die eine Neigung (γ) bezüglich der Horizontalebene (H) aufweist.

13. Vorrichtung nach Anspruch 12, dadurch gekennzeichnet, daß die Neigung (γ) zwischen 5° und 85°, vorzugsweise zwischen 20° und 70°, verläuft.

14. Vorrichtung nach Anspruch 12 oder 13, dadurch gekennzeichnet, daß die Grube (1) in der Nähe ihrer Seitenwand (96) mit einem Rad, Zahnrad oder Zylinder (99) verbunden ist, auf dem der Käfig (2) oder ein Teil davon ruht, um ein Drehen des Käfigs (2) oder des Bodens (8) zu bewirken.

15. Vorrichtung nach Anspruch 14, dadurch gekennzeichnet, daß der Käfig (2) auf seiner Unterseite mit einem Schenkel (101) versehen ist, welcher den Zylinder, das Rad oder das Zahnrad berührt, um ein Drehen des Bodens (8) während des Öffnens der Seitenwand (10) zu verhindern.

16. Vorrichtung nach einem der vorhergehenden Ansprüche, dadurch gekennzeichnet, daß die Vorrichtung ein Mittel umfaßt, daß gestattet oder bewirkt, daß sich die erste Seitenwand derart bewegt, daß eine Öffnung (12) zwischen der ersten Seitenwand (10) und dem Boden (8) zum Entfernen eines Tieres aus dem Käfig gebildet wird.

17. Vorrichtung nach einem der vorhergehenden Ansprüche 1 bis einschließlich 15, dadurch gekennzeichnet, daß ein Teil des Bodens (8) mit der ersten Seitenwand verbunden ist und daß die Vorrichtung Mittel umfaßt, die ein Bewegen der ersten Seitenwand gestatten oder bewirken um, zum Entfernen eines Tieres aus dem Käfig, den Boden (8) zu öffnen.

18. Vorrichtung nach Anspruch 17, dadurch gekennzeichnet, daß der Käfig mit zwei einander gegenüberliegenden, drehbaren Seitenwänden versehen ist, wobei ein erster Teil des Bodens mit einer ersten Seitenwand verbunden ist, während der zweite Teil des Bodens mit der zweiten Seitenwand verbunden ist, und daß die Vorrichtung Mittel umfaßt, die ein derartiges Bewegen der Seitenwände gestatten oder bewirken, daß eine Öffnung zwischen dem ersten Teil des Bodens und dem zweiten Teil des Bodens zum Freigeben eines Tieres aus dem Käfig gebildet wird.

19. Vorrichtung nach Anspruch 18, dadurch gekennzeichnet, daß jede Seitenwand einen Teil des Bodens trägt und daß die Seitenwände durch ein Mittel miteinander verbunden sind, wobei die beiden Teile des Bodens voneinander wegbewegt werden, um eine Öffnung zum Freigeben eines Tieres aus dem Käfig zu bilden.

20. Vorrichtung nach Anspruch 1 bis einschließlich 17, dadurch gekennzeichnet, daß die Vorrichtung mit einem Mittel versehen ist, das ein Drehen des Käfigs zumindest während des Öffnens des Bodens gestattet oder bewirkt.

21. Vorrichtung nach Anspruch 20, dadurch gekennzeichnet, daß das obengenannte Mittel ein Drehen des Käfigs in Richtung auf die erste Seitenwand gestattet oder bewirkt, auf die durch das in dem Käfig liegende Tier eine Kraft ausgeübt wird.

## Revendications

1. Installation d'assommage des animaux consistant en une série de cages (2) qui sont déplacées par un mécanisme moteur (4, 5) dans une fosse (1), dont chacune (2) comprend un fond (8), deux côtés (10, 100), et aux extrémités desquelles il y a de préférence un ou deux parois ou portes, dans lesquelles des moyens agissent sur un des côtés et sur le fond de la cage pour permettre au fond (8) de tourner autour d'un premier axe (9) afin de former une ouverture (12) dans un desdits côtés pour enlever un animal assommé de la cage, caractérisée en ce que lesdits moyens comprennent un premier moyen (7) qui permet à la cage (2) de tourner par rapport au premier axe (9) sans former d'ouverture (12) pour enlever un animal de la cage de telle manière qu'une puissance motrice est appliquée à l'animal se trouvant dans la cage, dans la direction d'un premier côté (10), et un deuxième moyen qui empêche ladite ouverture (12) d'être formée pour libérer un animal de la cage pendant la rotation de la cage par ledit premier moyen de telle manière qu'après avoir désengager ledit deuxième moyen, ledit premier côté (10) tourne afin de former une ouverture (12) pour libérer un animal de ladite cage.

2. Installation selon la revendication 1, caractérisée en ce que le premier moyen (7) qui déplace la cage (2) ou le fond (8) ou l'amène à se déplacer consiste en un élément (15) qui est connecté à la cage ou au fond et qui est déplacé le long d'un moyen de guidage (71) afin d'amener la cage ou le fond (8) à tourner.

3. Installation selon la revendication 1, caractérisée en ce que le premier moyen qui déplace la cage ou le fond ou l'amène à se déplacer consiste en un élément qui est connecté à la fosse et sur lequel la cage ou une partie de celle-ci est déplacée afin d'amener la cage ou le fond à tourner.

4. Installation selon la revendication 2, caractérisée en ce qu'un système (31, 46) applique une force au premier côté (10) afin d'empêcher, pendant la rotation du fond (8), la formation d'une ouverture (12) pour libérer ou retirer un animal de la cage.

5. Installation selon une des revendications précédentes, caractérisée en ce que le premier côté (10) susmentionné est monté de manière rotative sur un axe (11) et en ce que le deuxième moyen applique une force au premier côté (10) afin d'empêcher, pendant la rotation du fond (8) par le premier moyen, que le côté (10) susmentionné ne tourne par rapport à son axe (11), formant de ce fait une ouverture (12) pour libérer un animal de la cage.

6. Installation selon la revendication 5, caractérisée en ce que chaque cage (2) est suspendue de manière rotative à un axe (9) tandis que le premier côté (10) est connecté de manière rotative à la cage (2) au moyen d'un axe (11), en ce que la cage est pourvue d'un système de verrouillage (31, 49) pour le premier côté (10), dans laquelle à cause du premier moyen (7), le fond (8), le premier côté (10) et la cage (2) tournent ensemble autour de l'axe (9) auquel la cage (2) est suspendue, et dans laquelle après rotation conjointe et après déverrouillage du premier côté (10), ledit premier côté (10) tourne autour de son axe (11) afin de former une ouverture (12) pour libérer un animal de la cage.

7. Installation selon la revendication 6, caractérisée en ce que le premier moyen est une roue ou une roue d'engrenage (15) qui est montée sur la cage et qui roule sur un moyen de guidage (71) afin d'amener la cage (2) à tourner, à la suite de quoi l'animal est déplacé vers le premier côté (10) de la Gage.

8. Installation selon la revendication 6, caractérisée en ce que le système de verrouillage consiste en un membre de verrouillage (31) qui est pourvu d'une tête (33, 42), l'installation étant pourvue d'un mécanisme (30, 43) ayant un guide (39, 49) pour la tête (33, 42) susmentionnée au moyen duquel la tête susmentionnée est déplacée par rapport au premier côté (10) afin de réaliser le déverrouillage.

9. Installation selon la revendication 6, caractérisée en ce que l'installation est pourvue d'un moyen de guidage (71) sur lequel une roue ou une roue d'engrenage (46) est connectée au moyen d'un bras (44) au premier côté (10) pour empêcher, pendant la rotation du fond (8) par le premier moyen, qu'une ouverture (12) se forme pour libérer ou retirer un animal de la cage (2),
en ce que le fond est connecté à un bras (45) qui porte une roue ou une roue d'engrenage (46) qui roule sur le moyen de guidage (71) susmentionné pour empêcher que la cage ne tourne quand l'ouverture (12) est formée, et
en ce que un des bras susmentionnés est monté de manière rotative, le bras susmentionné tournant de telle manière que le système de verrouillage (49) est déverrouillé quand la roue ou la roue d'engrenage dudit bras tournant touche le moyen de guidage (71).

10. Installation selon l'une quelconque des revendications précédentes, caractérisée en ce qu'elle est pourvue d'un système (19) destiné à permettre au premier côté (10) de tourner tout en formant une ouverture pour libérer ou retirer un animal de la cage et / ou pour amener ledit côté (10) à tourner, dans un état fermé, par rapport à la cage.

11. Installation selon la revendication 10, caractérisée en ce que le système (19) destiné à permettre au premier côté (10) de tourner comprend un levier en forme de Y (20) dont les deux bras (21, 22) sont pourvus de roulettes (23, 24) tandis que le troisième bras (27) est connecté par un moyen destiné à amener le lever (20) à tourner autour de son axe (28), les roulettes (23, 24) susmentionnées étant prévues pour rouler le long du côté (10) et / ou la cage (2), à la suite de quoi, dans une première position (D1), une (23) des roulettes susmentionnées touche le côté fermé (10), tandis que dans une deuxième position (D2, E2), les roulettes susmentionnées sont déplacées pour permettre, dans un premier temps, au côté (10) d'être ouvert et, dans un deuxième temps, de refermer ledit côté (10).

12. Installation selon la revendication 1, caractérisée en ce que, près de la table (6), la chaîne (4) court dans une direction qui a une inclinaison (γ) par rapport au plan horizontal (H).

13. Installation selon la revendication 12, caractérisée en ce que l'inclinaison (γ) se situe entre 5° et 85°, de préférence entre 20° et 70°.

14. Installation selon la revendication 12 ou 13, caractérisér en ce que la fosse (1) est pourvue à proximité de son côté (96) d'une roue, roue d'engrenage ou cylindre (99) sur laquelle la cage (2) ou une partie de celle-ci repose afin d'amener la cage (2) ou le fond (8) à tourner.

15. Installation selon la revendication 14, caractérisée en ce que la cage (2) est pourvue sur le dessous d'une jambe (101) touchant le cylindre, la roue ou la roue d'engrenage afin d'empêcher le fond (8) de tourner pendant l'ouverture du côté (10).

16. Installation selon l'une quelconque des revendications précédentes, caractérisée en ce que l'installation comprend des moyens pour autoriser ou amener le premier côté à se déplacer de manière à former une ouverture (12) entre ledit premier côté (10) et le fond (8) pour enlever un animal de la cage.

17. Installation selon l'une quelconque des revendications précédentes 1 à 15 incluse, caractérisée en ce qu'une partie du fond (8) est connectée au premier côté, et en ce que l'installation comprend des moyens pour autoriser ou amener ledit premier côté à se déplacer pour ouvrir le fond (8) pour enlever un animal de la cage.

18. Installation selon la revendication 17, caractérisée en ce que la cage est pourvue de deux côtés opposés rotatifs, une première partie du fond étant connectée à un premier côté tandis que la deuxième partie du fond est connectée au deuxième côté, et en ce que l'installation comprend des moyens pour autoriser ou amener lesdits côtés à se déplacer de manière à former une ouverture entre la première partie du fond et la deuxième partie pour libérer un animal de la cage.

19. Installation selon la revendication 18, caractérisée en ce que chaque côté supporte une partie du fond, et en ce que les côtés sont joints ensemble par un moyen, les deux parties du fond écartées l'une de l'autre de manière à former une ouverture pour libérer un animal de la cage.

20. Installation selon une des revendications 1 à 17, caractérisée en ce que l'installation est pourvue d'un moyen pour autoriser ou amener la cage à tourner, au moins pendant l'ouverture du fond.

21. Installation selon la revendication 20, caractérisée en ce que le moyen susmentionné autorise ou amène la cage à tourner dans la direction du premier côté auquel une force est appliquée par l'animal qui se trouve dans la cage.
